Europäisches Patentamt

European Patent Office

Office européen des brevets

(19)

(11) **EP 0 770 177 B1**

(12) **EUROPÄISCHE PATENTSCHRIFT**

(45) Veröffentlichungstag und Bekanntmachung des Hinweises auf die Patenterteilung:
**31.05.2000 Patentblatt 2000/22**

(21) Anmeldenummer: **96908020.9**

(22) Anmeldetag: **29.03.1996**

(51) Int Cl.7: **F02P 5/04**

(86) Internationale Anmeldenummer:
**PCT/DE96/00613**

(87) Internationale Veröffentlichungsnummer:
**WO 96/35874 (14.11.1996 Gazette 1996/50)**

(54) **VERFAHREN UND VORRICHTUNG ZUR STEUERUNG DES DREHMOMENTS EINER BRENNKRAFTMASCHINE**

PROCESS AND DEVICE FOR CONTROLLING THE TORQUE OF AN INTERNAL COMBUSTION ENGINE

PROCEDE ET DISPOSITIF DE REGULATION DU COUPLE D'UN MOTEUR A COMBUSTION INTERNE

(84) Benannte Vertragsstaaten:
**DE FR IT**

(72) Erfinder:
- **LEHNER, Vera**
  **D-71732 Tamm (DE)**
- **MELCHIOR, Gerard**
  **D-71701 Schwieberdingen (DE)**

(30) Priorität: **13.05.1995 DE 19517673**

(43) Veröffentlichungstag der Anmeldung:
**02.05.1997 Patentblatt 1997/18**

(73) Patentinhaber: **ROBERT BOSCH GMBH**
**70442 Stuttgart (DE)**

(56) Entgegenhaltungen:
**US-A- 5 253 623**

- **PATENT ABSTRACTS OF JAPAN vol. 014, no. 157 (M-0955), 27.März 1990 & JP,A,02 019635 (MITSUBISHI ELECTRIC CORP), 23.Januar 1990,**

**Beschreibung**

Stand der Technik

Die Erfindung betrifft ein Verfahren und eine Vorrichtung zur Steuerung des Drehmoments einer Brennkraftmaschine gemäß den Oberbegriffen der unabhängigen Patentansprüche.

Ein derartiges Verfahren bzw. eine derartige Vorrichtung ist aus der DE 34 39 927 C2 (US-Patent 4,592,320) bekannt. Dort werden am Beispiel einer Leerlauffüllungsregelung Maßnahmen zur Kompensation einer Drehzahländerung bei Aufschalten einer Last, wie z.B. einer Klimaanlage, eines Getriebes, eines Lüfters, einer Kupplung, etc. vorgeschlagen. Die Maßnahmen bestehen in einer Vorsteuerung des Leerlauffüllungsreglers, bei der die Luftzufuhr zur Brennkraftmaschine beim Aufschalten der Last unabhängig vom Regler erhöht wird. Auf der Basis des Reglerausgangssignals im ausgeregelten Zustand wird dann der Erhöhungsfaktor der Luftzufuhr angepaßt. Da prinzipbedingt die Auswirkung der Veränderung der Luftzufuhr am Drehmoment bzw. an der Drehzahl der Brennkraftmaschine erst zeitverzögert auftritt, zeigt das bekannte Verfahren bzw. die bekannte Vorrichtung in einigen Anwendungsfällen ein unbefriedigendes Verhalten. In diesen Anwendungsfällen führt die Laständerung infolge der verzögerten Momentenänderung der Brennkraftmaschine zu relativ großen Momenten- bzw. Drehzahländerungen oder -schwankungen, die den Fahrkomfort und das Fahrverhalten beeinträchtigen können.

Es ist daher Aufgabe der Erfindung, Maßnahmen anzugeben, mit deren Hilfe die durch die Laständerung notwendige Momentenänderung der Brennkraftmaschine verzögerungsfrei durchgeführt wird.

Dies wird durch die kennzeichnenden Merkmale der unabhängigen Patentansprüche erreicht.

Vorteile der Erfindung

Die erfindungsgemäße Vorgehensweise verbessert den Fahrkomfort und das Fahrverhalten einer Brennkraftmaschine bei Änderung der Motorlast. Dabei folgt das Motormoment verzögerungsfrei einer durch die Laständerung erforderlichen Momentenänderung.

Besondere Vorteile ergeben sich aus der erfindungsgemäßen Vorgehensweise bei Anwendung auf eine Leerlaufregelung. Im Leerlaufbetriebszustand bzw. im leerlaufnahen Betriebszustand wirken sich Laständerungen auf das von der Brennkraftmaschine abzugebende Drehmoment sehr stark aus, so daß durch die erfindungsgemäße Vorgehensweise in diesem Betriebszustand eine erhebliche Verbesserung des Fahrkomforts sowie der Schnelligkeit der Regelung erreicht wird.

Besonders vorteilhaft ist, daß die gemäß der erfindungsgemäßen Vorgehensweise in jedem Betriebspunkt der Brennkraftmaschine vorgegebene Momentenreserve im eingeschwungenen Zustand für jeden Betriebspunkt betragsmäßig gleich ist, so daß die Regelung in jedem Betriebspunkt entsprechend schnell auf Laständerungen reagiert.

Weitere Vorteile ergeben sich aus der nachfolgenden Beschreibung von Ausführungsbeispielen sowie aus den abhängigen Ansprüchen.

Zeichnung

Die Erfindung wird nachstehend anhand der in der Zeichnung dargestellten Ausführungsformen näher erläutert. Dabei zeigt Figur 1 ein Übersichtsblockschaltbild einer Steuervorrichtung für das Drehmoment einer Brennkraftmaschine, während in Figur 2 die erfindungsgemäße Vorgehensweise anhand von Zeitdiagrammen dargestellt ist. Figur 3 schließlich gibt Hinweise auf eine Realisierung der Erfindung als Rechnerprogramm anhand eines Flußdiagramms.

Beschreibung von Ausführungsbeispielen

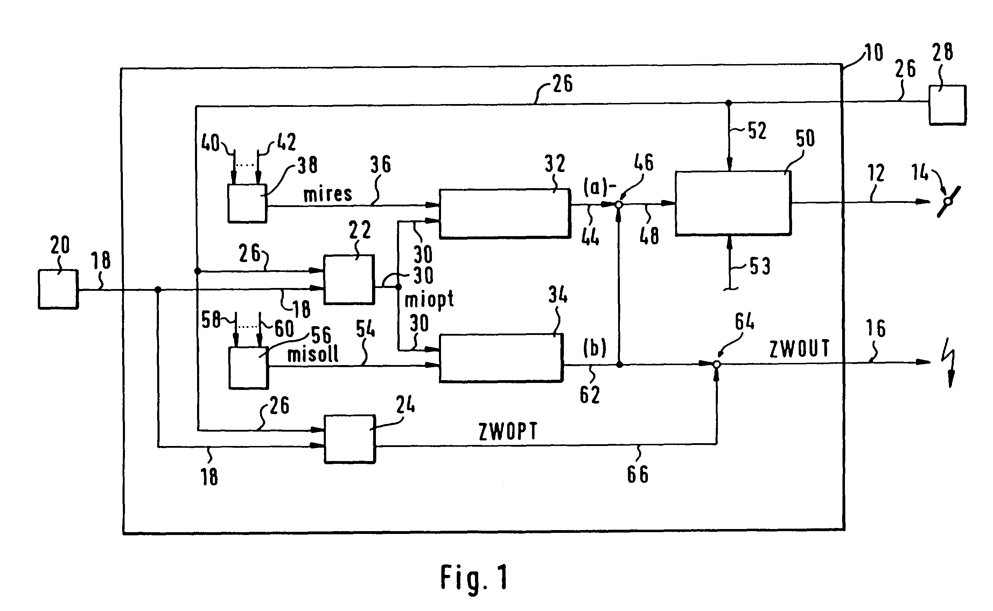

In Figur 1 ist eine Steuereinheit 10 dargestellt, welche über eine Ausgangsleitung 12 die Luftzufuhr zur Brennkraftmaschine über ein elektrisch betätigbares Stellelement 14, vorzugsweise eine Drosselklappe, beeinflußt. Ferner weist die Steuereinheit 10 wenigstens eine Ausgangsleitung 16 zur Beeinflussung des Zündzeitpunkts der Brennkraftmaschine auf. Eingangsleitungen 18 und 26 verbinden die Steuereinheit 10 mit einer Meßeinrichtung 20 zur Erfassung ihrer Drehzahl und einer Meßeinrichtung 28 zur Erfassung der Motorlast (Luftmasse, Luftmenge, Saugrohrdruck, Brennraumdruck, Quotient aus einer dieser Größen und der Motordrehzahl, etc.). Die Steuereinheit 10 umfaßt im bevorzugten Ausführungsbeispiel wenigstens einen Mikrocomputer, dessen mit Blick auf die erfindungsgemäße Vorgehen wesentliche Programmteile anhand des in Figur 1 dargestellten Blockschaltbildes verdeutlicht sind. Die Eingangsleitung 18 wird auf zwei Kennfelder 22 und 24 geführt, denen als zweite Leitung die Eingangsleitung 26 von einer Meßeinrichtung 28 zur Erfassung der Motorlast zugeführt wird. Die Ausgangsleitung 30 des Kennfeldes 22 führt auf einen ersten Berechnungsblock 32 und auf einen zweiten Berechnungsblock 34. Dem ersten Berechnungsblock 32 wird eine weitere Eingangsleitung 36 von einem Kennfeld bzw. einer Kennlinie, einer Tabelle oder einem Speicherplatz 38 zugeführt. Dem Block 38 sind ggf. Eingangsleitungen 40 bis 42 zugeführt, welche von nicht dargestellten Meßeinrichtungen Betriebsgrößen der Brennkraftmaschine und/oder des Fahrzeugs zuführen. Die Ausgangsleitung 44 des Berechnungsblocks 32 führt auf eine Verknüpfungsstelle 46, deren Ausgangsleitung 48 auf einen Regler 50 geführt ist. Diesem wird ferner wenigstens eine Leitung 52 von der Leitung 26 sowie ggf. weitere Leitungen 53 für die Motordrehzahl zugeführt. Die Ausgangsleitung des Reglers 50 stellt die Ausgangsleitung 12 der Steuereinheit 10 dar. Dem Berechnungsblock 34 wird eine Leitung 54 zugeführt, die von einem Berechnungsblock 56, dem über die Leitungen 58 bis 60 Betriebsgrößen der Brennkraftmaschine und/oder des Fahrzeugs zugeführt werden, ausgeht. Die Ausgangsleitung 62 des Berechnungsblocks 34 führt einerseits zur Verknüpfungsstelle 46, andererseits zu einer Verknüpfungsstelle 64. Dieser wird ferner die Leitung 66 vom Kennfeld 24 zugeführt. Die Ausgangsleitung der Verknüpfungsstelle 64 ist die Ausgangsleitung 16 der Steuereinheit 10.

Grundgedanke der Erfindung ist, daß durch Steuerung des Zündwinkels und der Luftzufuhr zur Brennkraftmaschine ein Betriebspunkt der Brennkraftmaschine eingestellt wird, bei welchem durch Verstellen des Zündwinkels eine schnelle Momentenveränderung im momentenerhöhenden und im momentenreduzierenden Sinn möglich ist, so daß bei einer Laständerung das Moment der Brennkraftmaschine verzögerungsfrei der Vorgabe folgt.

Für jeden Betriebszustand der Brennkraftmaschine, der im wesentlichen durch Drehzahl und Last bestimmt ist, wird das vorgegebene Motormoment MISoll eingestellt, mit der Nebenbedingung, daß die Einstellung des Zündwinkels derart erfolgt, daß eine vorgegebene Drehmomentenreserve MIRES entsteht. Dies bedeutet, daß über eine Verstellung des Zündwinkels in beiden Richtungen das Motormoment wenigstens um den Betrag der Momentenreserve MIRES verändert werden kann.

Für alle Last/Drehzahl-Punkte der Brennkraftmaschine gilt für den Zusammenhang zwischen Moment und Zündwinkel die folgende Parabel P:

$$MI/MIOPT = P(ZWOUT - ZWOPT) \qquad (1)$$

bzw. ihre Umkehrfunktion

$$ZWOUT - ZWOPT = INVP (MI/MIOPT) \qquad (2)$$

$$\text{mit } P(x) = a*x^2 + b*x + c \text{ mit } x = ZWOUT-ZWOPT \qquad (3)$$

(ZWOPT = optimaler Zündwinkel mit Blick auf minimalen Kraftstoffverbrauch; ZWOUT = ausgegebener Zündwinkel; MI = abgegebenes Drehmoment, MIOPT = abgegebenes Drehmoment bei Einstellung des optimalen Zündwinkels)

Zur Steuerung der Brennkraftmaschine wird aus dem Kennfeld 24 in Abhängigkeit von Drehzahl und Last ein einzustellender Zündwinkel ZWOPT ausgelesen. Das Kennfeld 24 ist dabei derart vorgegeben, daß der ausgelesene Zündwinkel zu einem Betrieb der Brennkraftmaschine mit möglichst hohem Wirkungsgrad, das heißt möglichst großer Momentenabgabe bei möglichst kleinem Kraftstoffverbrauch, führt. Entsprechend wird im vorgegebenen Kennfeld 22 ausgehend von Drehzahl und Last das von der Brennkraftmaschine abgegebene bzw. durch Verbrennung erzeugte Drehmoment MIOPT bei eingestelltem optimalen Zündwinkel bestimmt. Auch dieses Kennfeld ist vorgegeben, wobei die einzelnen Parameter experimentell für jeden Brennkraftmaschinentyp bestimmt werden. Im Berechnungsblock 56 wird abhängig von den über die Leitungen 58 bis 60 zugeführten Betriebsgrößen ein Sollwert für das von der Brennkraftmaschine abzugebende bzw. zu erzeugende Drehmoment vorgegeben. Die Betriebsgrößen sind beispielsweise der Betätigungsgrad eines vom Fahrer betätigbaren Bedienelements, Eingriffsgrößen weiterer Steuersysteme wie eine Antriebsschlupfregelung, sowie im vorliegenden bevorzugten Anwendungsfall der Leerlaufregelung die Eingriffsgröße eines Leerlaufdrehzahlreglers. Dieser bestimmt den einzustellenden Momentenwert in bekannter Weise nach Maßgabe einer aus Betriebsgrößen ermittelten Solldrehzahl sowie der Istdrehzahl. Dabei kann der Vorgabewert für das Drehmoment auch über ein Kommunikationssystem von einer anderen Steuereinheit zugeführt werden. Im bevorzugten Ausführungsbeispiel wird außerhalb des Leerlauf- bzw. leerlaufnahen Bereichs durch Einstellung der Luft- und/oder Kraftstoffzufuhr zur Brennkraftmaschine bei optimalem Zündwinkel das Drehmoment durch Vergleich von Soll- und Istmoment im Sinne einer Annäherung des Istmoments an den Sollwert eingestellt. Diese Vorgehensweise ist in Figur 1 aus Übersichtlichkeitsgründen nicht dargestellt.

Im Leerlauf- bzw. im leerlaufnahen Bereich wird bei einer Änderung der Motorlast, beispielsweise durch Aufschalten externer Lasten wie eines Klimakompressors, eines Automatikgetriebes, etc. oder bei kontinuierlich sich verstellenden Lasten, wie z.B. einer Servolenkung, zur Kompensation der Laständerung bei konstant bleibender oder sich verändernder Leerlaufdrehzahl das von der Brennkraftmaschine erzeugte Drehmoment verändert. Hier erweist sich die oben dargestellte Einstellung der Brennkraftmaschine für einen Betrieb mit hohem Wirkungsgrad insbesondere bei momentenerhöhenden Eingriffen als problematisch, da dann die zur Lastkompensation oder zur Drehzahländerung notwendige Drehmomentenänderung ausschließlich über eine Veränderung der Luftzufuhr durchgeführt werden kann. Dies deshalb, weil durch die optimale Einstellung des Zündwinkels ein drehmomenterhöhender Eingriff über den Zündwinkel nicht möglich ist. Folge davon ist, daß infolge der Verzögerungen in der Luftzufuhr auch eine Verzögerung im Momentenaufbau zu erwarten ist.

Um bei einem derartigen Steuersystem die Vorteile eines möglichst geringen Kraftstoffverbrauchs zu erreichen und dennoch ein verzögerungsfreies Nachfolgen des Drehmoments bei einer Änderung der Momentenvorgabe infolge einer Laständerung zu gewährleisten, wird zumindest im Leerlauf, im leerlaufnahen Bereich bzw. bei aktiver Leerlaufregelung ein Reservedrehmomentenwert MIRES vorgegeben. Dieser ist entweder als Festwert mit Blick auf einen Kompromiß zwischen möglichst großer Drehmomentenreserve und möglichst geringem Einfluß auf den Kraftstoffverbrauch vorgegeben oder er wird abhängig von Betriebsgrößen wie Motordrehzahl, Fahrgeschwindigkeit, Lastzustand des Motors, Motortemperatur, etc. aus vorbestimmten Kennlinien oder -feldern bestimmt. Dabei wird im allgemeinen mit größeren Motordrehzahlen bzw. Fahrgeschwindigkeiten ein kleinerer, mit höherer Last und niedrigen Motortemperaturen ein betragsmäßig größerer Wert für die Drehmomentreserve gewählt.

Erfindungsgemäß wird also in zumindest einem Betriebsbereich der Brennkraftmaschine eine Momentenreserve vorgegeben, welche durch gemeinsame Einstellung von Luftzufuhr und Zündwinkel bereitgestellt wird. Bei Laständerung wird die notwendige Drehmomentenänderung auf schnelle Weise durch Einstellen des Zündwinkels im Rahmen der vorgegebenen Momentenreserve aufgebracht.

Zu diesem Zweck wird im Berechnungsblock 32 auf der Basis der über die Leitung 36 zugeführten Momentenreserve MIRES und der über die Leitung 30 zugeführten Momentenwert MIOPT ein Signalwert A berechnet durch Anwendung der Gleichung (2) :

$$A = invP(1-MIRES/MIOPT) \tag{4}$$

Diese Größe stellt für den jeweiligen Betriebspunkt der Brennkraftmaschine den Sollabstand zwischen dem optimalen Zündwinkel ZWOPT und dem auszugebenden Zündwinkel ZWOUT dar, bei dem sich die vorgegebene Drehmomentenreserve MIRES einstellt.

Im Berechnungsblock 34 wird aus dem über die Leitung 30 zugeführten Momentenwert MIOPT und dem über die Leitung 54 zugeführten Momentensollwert MISoll eine Größe B gebildet ebenfalls nach Maßgabe der Gleichung (2):

$$B = invP(MISoll/MIOPT) \tag{5}$$

Diese Größe stellt für den jeweiligen Betriebspunkt der Brennkraftmaschine den notwendigen Abstand zum optimalen Zündwinkel ZWOPT dar, um das gewünschte Drehmoment MISoll einzustellen.

Im Betrieb mit konstanter Last, das heißt konstanter Drehmomentenvorgabe, wird der auszugebende Zündwinkel ZWOUT in der Verknüpfungsstelle 64 durch Addition des optimalen Zündwinkels ZWOPT (Leitung 66) und der Größe B (Leitung 62) bestimmt. Entsprechend ergibt sich auf der Ausgangsleitung der Verknüpfungsstelle 64 durch Subtraktion der Größe A von der Leitung B der Wert, um den die Luftzufuhr zur Brennkraftmaschine zur Einstellung der Drehmomentenreserve und der Drehmomentenvorgabe zu verstellen ist. Dieser Wert wird dem Regler 50 zugeführt, welcher entweder im Rahmen eines Regelkreises nach einer vorgegebenen Regelstrategie oder im Rahmen einer Vorsteuerung über die Leitung 12 die Luftzufuhr zur Brennkraftmaschine durch Einstellung der Drosselklappe 14 einstellt. Dabei wird als Regelgröße in einem vorteilhaften Ausführungsbeispiel die von der Meßeinrichtung 28 erfaßte Lastgröße bzw. der Quotient dieser Größe mit der Drehzahl verwendet.

Im stationären Zustand, wenn bei gegebenem Zündwinkel die geforderte Momentenreserve vorliegt, sind die Größen A und B gleich. Eine Beeinflussung der Luftzufuhr ist in diesem stationären Betriebsfall nicht notwendig.

Ist im aktuellen Betriebspunkt der Brennkraftmaschine die eingestellte Drehmomentenreserve größer als die vorgegebene, so ist die Größe B kleiner als die Größe A. Der Regler 50 wird dann infolge seines negativen Eingangswertes die Luftzufuhr verringern und den Motor in einen Betriebspunkt kleinerer Last bringen. Durch Rückkopplung über die Kennfelder 22 und 24 wird diese Laständerung bei der Einstellung des Zündwinkels berücksichtigt, so daß dann als Folge der Verringerung der Luftzufuhr ein früherer, momentenerhöhender Zündwinkel ausgegeben wird, bis die Größen A und B gleich sind.

Ist die Drehmomentenreserve kleiner als der vorgegebene Wert, ist die Größe B größer als der Wert A. Infolge seines positiven Eingangssignals bringt der Regler 50 die Brennkraftmaschine in einen Betriebspunkt höherer Last, das heißt, er erhöht die Luftzufuhr. Durch Rückkopplung wird dann der Zündwinkel in Richtung spät, das heißt momentenreduzierend, gesteuert, bis die Größen A und B gleich sind.

Zusammenfassend kann festgestellt werden, daß durch die in Figur 1 dargestellte Steueranordnung durch Beeinflussung von Zündwinkel und Luftzufuhr im Betriebszustand ohne Laständerung immer die vorgegebene Drehmomentenreserve eingestellt wird, indem der Zündwinkel entsprechend auf einen gegenüber dem Kennfeldzündwinkel (Kennfeld 24, ZWOPT) späteren Wert eingestellt wird.

Ändert sich die Last der Brennkraftmaschine, so ändert sich der Momentenvorgabewert MISoll. Ist die Veränderung des Vorgabewerts kleiner als die eingestellte Drehmomentenreserve, wird über den Berechnungsblock 34, die Größe B und die Verknüpfungsstelle 64 der auszugebende Zündwinkel derart beeinflußt, daß die geforderte Veränderung des Motordrehmoments sofort verzögerungsfrei eingestellt wird. Bleibt im folgenden das Moment unverändert, erfolgt eine automatische Einregelung auf den neuen Lastpunkt unter Einstellung der Drehmomentenreserve wie oben dargestellt.

Ist die notwendige Veränderung des Drehmoments größer als die vorhandene Momentenreserve, löst der Berechnungsblock 34 eine sofortige Steuerung des Zündwinkels auf den Winkel des Kennfelds 24 aus. Das Istdrehmoment der Brennkraftmaschine wird dann sprungartig verzögerungsfrei auf den Wert des Kennfelds 22 geführt. Damit ist der Vorgabewert des Drehmoments jedoch noch nicht erreicht. Folge davon ist, daß durch den Berechnungsblock 32, durch die dort ermittelte Größe A sowie durch die Größe B eine Veränderung der Luftzufuhr stattfindet. Diese stellt das Moment und damit die Drehzahl auf den gewünschten Wert ein. Entspricht nach Abschluß des Ausregelvorgangs der Drehmomentenwert dem Sollwert, so wird, wie oben dargestellt, die vorgegebene Drehmomentenreserve durch Steuerung von Zündwinkel und Luft eingestellt.

Liegt eine negative Laständerung vor, das heißt, wird das Sollmoment kleiner als das momentane Motormoment, erfolgt sofort ein Spätziehen des Zündwinkels mit anschließender Lastreduzierung des Motors, bis sich im neuen Betriebspunkt erneut die vorgegebene Drehmomentenreserve eingestellt hat.

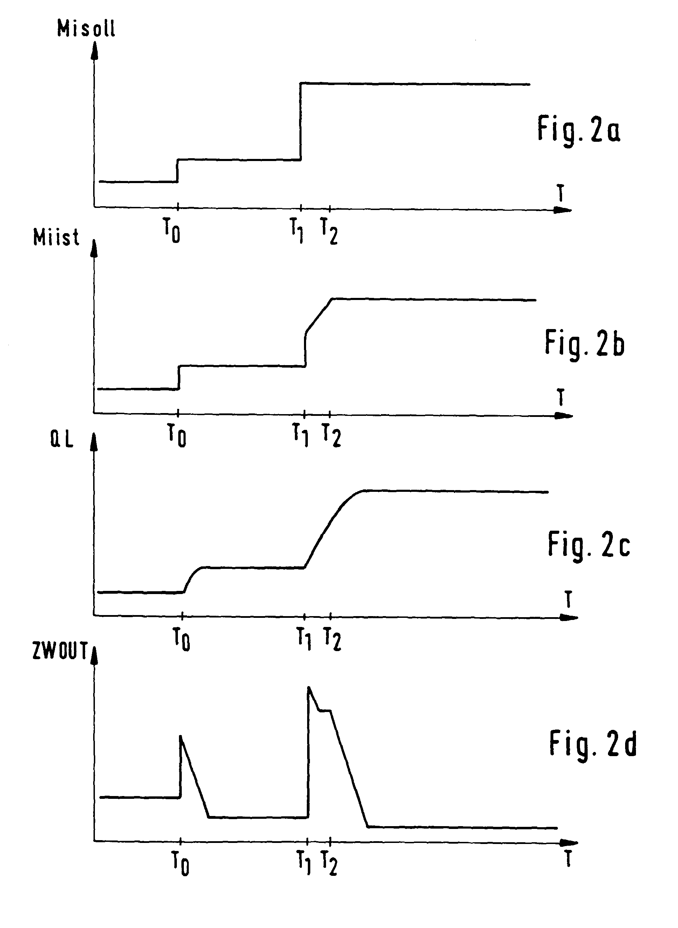

Die Wirkungen der erfindungsgemäßen Vorgehensweise sind in Figur 2 anhand von Zeitdiagrammen verdeutlicht. Dabei ist in Figur 2a der Sollmomentenwert MISoll, in Figur 2b der Istmomentenwert MIIst, in Figur 2c ein Größe Q für die Luftzufuhr und in Figur 2d der ausgegebene Zündwinkel ZWOUT über der Zeit aufgetragen.

Bis zum Zeitpunkt T0 sei der Sollmomentenwert konstant. Die Brennkraftmaschine wird dann unter einer vorgegebenen Einstellung von Luftzufuhr Q und Zündwinkel ZWOUT betrieben, wobei eine vorgegebene Momentenreserve MIRES über den Zündwinkel eingestellt ist. Zum Zeitpunkt T0 treten infolge einer Lastaufschaltung ein Sprung im Sollmoment auf, welcher betragsmäßig kleiner als die eingestellte Drehmomentenreserve ist. Dies führt zum Zeitpunkt T0 zu einer sprungförmigen Verstellung des auszugebenden Zündwinkels, welche derart bemessen ist, daß zum Zeitpunkt TO das Motormoment verzögerungsfrei dem Sollwert folgt. Nach dem Zeitpunkt T0 wird die Momentenreserve durch Rücknahme des Zündwinkels und Aufsteuerung der Luftzufuhr wiederhergestellt.

Zum Zeitpunkt T1 sei durch Aufschaltung einer weiteren Last ein Sollmomentensprung erfolgt, der größer als die eingestellte Momentenreserve ist. Dies führt zum Zeitpunkt T1 zu einer sprungförmigen Verstellung des Zündwinkels auf ZWOPT, was eine entsprechende Verstellung des Istmotormoments nach sich zieht. Da die Momentenreserve zur Kompensation des Sollwertsprungs nicht ausreicht, wird nach dem Zeitpunkt T1 infolge der Leerlaufreglerfunktion eine Aufsteuerung der Luftzufuhr und damit des Istmoments vorgenommen. Zum Zeitpunkt T2 sei der Sollmomentensprung kompensiert, so daß nach dem Zeitpunkt T2 die erforderliche Drehmomentenreserve entsprechend dem Vorgehen nach dem Zeitpunkt T0 durch Zündwinkel- und Luftsteuerung eingestellt wird.

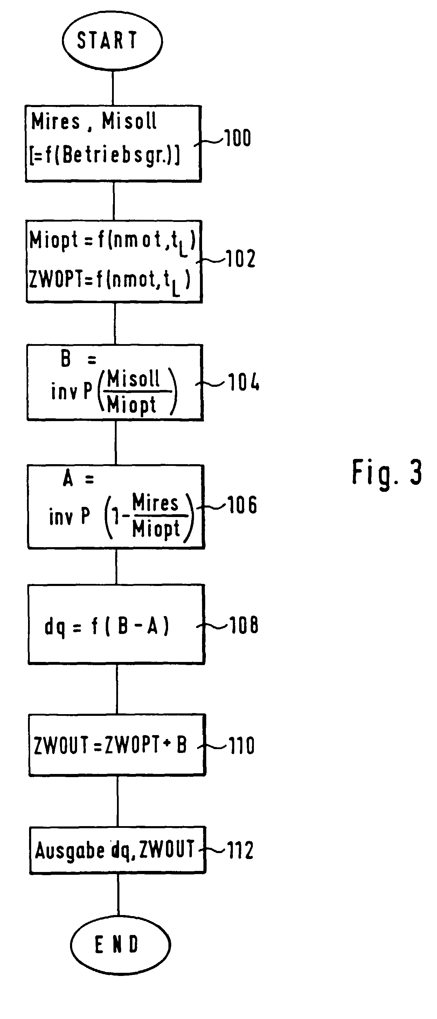

Die erfindungsgemäße Vorgehensweise ist im bevorzugten Ausführungsbeispiel als Teil des Programms eines Mikrocomputers ausgeführt. Hinweise auf ein solches Programm zur Realisierung der erfindungsgemäßen Vorgehensweise sind in Figur 3 dargestellt.

Nach Start des Programmteils zu vorgegebenen Zeitpunkten wird in einem ersten Schritt 100 die ggf. betriebsgrößenabhängigen Werte für die Drehmomentenreserve MIRES und des Drehmomentensollwerts MISoll eingelesen. Daraufhin wird im Schritt 102 aufgrund der vorgegebenen Kennfelder abhängig vom aktuellen Betriebspunkt, der aus Motordrehzahl und Motorlast bestimmt wird, der optimale Zündwinkel ZWOPT sowie das dabei eingestellte Motormoment MIOPT bestimmt. Daraufhin wird im Schritt 104 die Größe B und im darauffolgenden Schritt 106 die Größe A aus den oben dargestellten Gleichungen (4) und (5) berechnet. Im darauffolgenden Schritt 108 wird im Regler die Luftzufuhränderung DQ als Funktion der Differenz zwischen den Signalen B und A berechnet. Im darauffolgenden Schritt 110 wird der auszugebende Zündwinkel ZWOUT als Summe des optimalen Zündwinkels ZWOPT und der Größe B berechnet. Daraufhin werden im Schritt 112 die Luftsteuerwerte DQ sowie der Zündwinkelwert ZWOUT ausgegeben. Danach wird der Programmteil beendet und zu gegebener Zeit wiederholt.

Zusammenfassend sei festgestellt, daß im Rahmen der erfindungsgemäßen Vorgehensweise die Brennkraftmaschine zumindest im Leerlauf und/oder im leerlaufnahen Bereich stets in einem Betriebspunkt betrieben wird, indem eine vorgegebene Drehmomentenreserve über dem Zündwinkel vorliegt. Bei Bedarf kann diese Reserve als positives Moment verzögerungsfrei durch einen entsprechenden Zündwinkelsprung zur Verfügung gestellt werden. Ferner paßt sich die Einstellung der Brennkraftmaschine automatisch jedem Lastpunkt an, so daß im eingeschwungenen Zustand immer die gleiche Momentenreserve für einen späteren Lastsprung unabhängig vom momentanen Betriebspunkt vorliegt.

## Patentansprüche

1. Verfahren zur Steuerung des Drehmoments einer Brennkraftmaschine, mit einer Steuereinheit (10), die wenigstens Luftzufuhr und Zündwinkel einstellt, dadurch gekennzeichnet, daß die Luftzufuhr und der Zündwinkel derart eingestellt werden, daß sich eine vorgegebene Drehmomentenreserve (MIRES) über den Zündwinkel einstellt.

2. Verfahren nach Anspruch 1, dadurch gekennzeichnet, daß die Einstellung der Drehmomentreserve wenigstens im Leerlauf und/oder im leerlaufnahen Bereich erfolgt.

3. Verfahren nach Anspruch 1, dadurch gekennzeichnet, daß ein verbrauchs- und momentenoptimaler Zündwinkel derart korrigiert wird, daß die vorgegebene Momentenreserve vorliegt.

4. Verfahren nach Anspruch 1, dadurch gekennzeichnet, daß ein Sollwert für das von der Brennkraftmaschine abzugebende Moment vorgegeben wird, dieser Sollwert durch Einstellen der Luftzufuhr und des Zündwinkels eingestellt wird.

5. Verfahren nach Anspruch 4, dadurch gekennzeichnet, daß bei einer Veränderung des Sollwertes durch Lastveränderung eine sofortige Veränderung des Zündwinkels zur Kompensation der Sollwertänderung durchgeführt wird und nachfolgend durch Steuerung von Luftzufuhr und Zündwinkel die vorgegebene Drehmomentenreserve wieder eingestellt wird.

6. Verfahren nach Anspruch 1, dadurch gekennzeichnet, daß der vorgegebene Wert der Drehmomentenreserve die Abweichung des von der Brennkraftmaschine abgegebenen Drehmoments von einem optimalen Momentenwert in jedem Betriebszustand entspricht, der aus einer Einstellung des optimalen Zündwinkels resultiert.

7. Verfahren nach Anspruch 1, dadurch gekennzeichnet, daß die Drehmomentenreserve fest vorgegeben oder betriebsgrößenabhängig ist.

8. Verfahren nach Anspruch 1, dadurch gekennzeichnet, daß die Einstellung von Zündwinkel und Luftzufuhr zur Bereitstellung der vorgegegenen Drehmomentenreserve nach Maßgabe des parabelförmigen Zusammenhangs zwischen der Abweichung des Zündwinkels vom optimalen sowie des Istmoments vom optimalen Motormoment berechnet wird.

9. Verfahren nach Anspruch 1, dadurch gekennzeichnet, daß eine Änderung des abzugebenden Drehmoments im wesentliche verzögerungsfrei durch Veränderung der Zündwinkeleinstellung im Rahmen der vorgegebenen Drehmomentenreserve erfolgt.

10. Vorrichtung zur Steuerung des Drehmoments einer Brennkraftmaschine zur Durchführung des Verfahrens nach einem der Patentansprüche 1 bis 9, mit einer Steuereinheit (10), welche wenigstens Luftzufuhr und Zündwinkel einstellt, und Vorgabemittel (38) aufweist, die eine Drehmomentenreserve (MIRES) über dem Zündwinkel vorgeben, welche Steuereinheit ferner Einstellmittel (32, 34, 50) aufweist, welche die Luftzufuhr und den Zündwinkel einstellen, wobei die vorgegebene Drehmomentenreserve sich über den Zündwinkel einstellt.

## Claims

1. Method for controlling the torque of an internal combustion engine, having a control unit (10) which sets at least the air supply and ignition angle, characterized in that the air supply and the ignition angle are set in such a way that a defined torque margin (MIRES) is set by means of the ignition angle.

2. Method according to Claim 1, characterized in that the torque margin is set at least in idling mode and/or in the region near to idling mode.

3. Method according to Claim 1, characterized in that an ignition angle which is optimum in terms of consumption and torque is corrected in such a way that the defined torque margin is obtained.

**4.** Method according to Claim 1, characterized in that a setpoint value is defined for the torque which is to be output by the internal combustion engine, said setpoint value being set by setting the air supply and the ignition angle.

**5.** Method according to Claim 4, characterized in that when the setpoint value is changed as a result of a change in load, an immediate change of the ignition angle is carried out in order to compensate the setpoint value change, and the defined torque margin is subsequently set again by controlling the air supply and ignition angle.

**6.** Method according to Claim 1, characterized in that the defined value of the torque margin corresponds to the deviation between the torque output by the internal combustion engine and an optimum torque value in each operating state which results from a setting of the optimum ignition angle.

**7.** Method according to Claim 1, characterized in that the torque margin is permanently defined or is dependent on the operating variable.

**8.** Method according to Claim 1, characterized in that the setting of the ignition angle and air supply with the aim of providing the defined torque margin is calculated in accordance with the parabolic relationship between the deviation of the ignition angle from the optimum ignition angle and the deviation of the actual torque from the optimum engine torque.

**9.** Method according to Claim 1, characterized in that a change in the torque which is to be output takes place essentially without delay as a result of the ignition angle setting being changed within the scope of the defined torque margin.

**10.** Device for controlling the torque of an internal combustion engine in order to carry out the method according to one of Patent Claims 1 to 9, having a control unit (10) which sets at least the air supply and ignition angle and has defining means (38) which define a torque margin (MIRES) by means of the ignition angle, which control unit also has setting means (32, 34, 50) which set the air supply and the ignition angle, the defined torque margin being set by means of the ignition angle.

**Revendications**

**1.** Procédé de commande du couple d'un moteur à combustion interne à l'aide d'une unité de commande (10) qui règle au moins l'alimentation en air et l'angle d'allumage,
caractérisé en ce que
l'alimentation en air et l'angle d'allumage se règlent pour avoir une réserve de couple prédéterminée (MIRES) par l'angle d'allumage.

**2.** Procédé selon la revendication 1,
caractérisé en ce que
le réglage de la réserve de couple se fait au moins au ralenti et/ou dans une plage proche du ralenti.

**3.** Procédé selon la revendication 1,
caractérisé en ce qu'
on corrige un angle d'allumage optimum pour la consommation et le couple avec une réserve de couple prédéterminée.

**4.** Procédé selon la revendication 1,
caractérisé en ce qu'
on prédétermine une valeur de consigne du couple que doit fournir le moteur à combustion interne et on règle cette valeur de consigne en réglant l'alimentation en air et l'angle d'allumage.

**5.** Procédé selon la revendication 4,
caractérisé en ce que
pour une variation de la valeur de consigne par une variation de charge, on effectue une variation immédiate de l'angle d'allumage pour compenser la variation de charge et ensuite en commandant l'alimentation en air et l'angle d'allumage, on rétablit la réserve prédéterminée de couple.

**6.** Procédé selon la revendication 1,
caractérisé en ce que
la valeur prédéterminée de la réserve de couple correspond à la différence entre le couple fourni par le moteur à combustion interne et une valeur optimale de couple pour chaque état de fonctionnement résultant d'un réglage de l'angle d'allumage optimum.

**7.** Procédé selon la revendication 1,
caractérisé en ce que
la réserve de couple est prédéterminée de manière fixe ou dépend de grandeurs de fonctionnement.

**8.** Procédé selon la revendication 1,
caractérisé en ce que
le réglage de l'angle d'allumage et de l'alimentation en air pour fournir la réserve de couple prédéterminée se calcule par des relations en forme de paraboles entre la déviation de l'angle d'allumage par rapport à la valeur optimale et celle du couple réel par rapport au couple moteur optimum.

**9.** Procédé selon la revendication 1,
caractérisé par
une variation du couple à fournir qui se fait essentiellement sans retard par variation du réglage de l'angle d'allumage dans le cadre de la réserve de couple prédéterminée.

**10.** Dispositif de commande du couple d'un moteur à combustion interne pour la mise en oeuvre du procédé selon l'une des revendications 1 à 9, comprenant une unité de commande (10) qui règle au moins l'alimentation en air et l'angle d'allumage et des moyens (38) de prédétermination réglant une réserve de couple (MIRES) par l'angle d'allumage, cette unité de commande comprenant en outre des moyens de réglage (32, 34, 50) qui règlent l'alimentation en air et l'angle d'allumage pour avoir une réserve de couple prédéterminée par l'angle d'allumage.

Fig. 1

Misoll

Fig. 2a

T₀   T₁ T₂   T

Miist

Fig. 2b

T₀   T₁ T₂   T

QL

Fig. 2c

T₀   T₁ T₂   T

ZWOUT

Fig. 2d

T₀   T₁ T₂   T

START

Mires , Misoll
[=f(Betriebsgr.)] — 100

$Miopt = f(nmot, t_L)$
$ZWOPT = f(nmot, t_L)$ — 102

$B = \operatorname{inv} P\left(\dfrac{Misoll}{Miopt}\right)$ — 104

$A = \operatorname{inv} P\left(1 - \dfrac{Mires}{Miopt}\right)$ — 106

Fig. 3

$dq = f(B - A)$ — 108

$ZWOUT = ZWOPT + B$ — 110

Ausgabe dq, ZWOUT — 112

END